# EUROPEAN PATENT APPLICATION

(11) **EP 2 677 432 A1**
(43) Date of publication of application: **25.12.2013**
(21) Application number: 11858836.7
(22) Date of filing: 16.02.2011
(51) Int. Cl.: G06F 12/10, G06F 9/46, G06F 12/12

(54) **MEMORY MANAGEMENT PROGRAM, MEMORY MANAGEMENT METHOD, INFORMATION PROCESSING DEVICE, AND COMPUTER-READABLE RECORDING MEDIUM UPON WHICH MEMORY MANAGEMENT PROGRAM HAS BEEN RECORDED**

(71) Applicant: Fujitsu Limited, Kawasaki-shi, Kanagawa 211-8588 (JP)
(72) Inventor: OKANO, Kenji, Kawasaki-shi, Kanagawa 211-8588 (JP)
(74) Representative: HOFFMANN EITLE
(86) International application number: PCT/JP2011/053284
(87) International publication number: WO 2012/111113

(57) **Abstract**

A computer, which includes a plurality of arithmetic processing units, a main memory that stores data, and a cache memory that is shared from the plurality of arithmetic processing units and holds a part of the data stored in the main memory, and allows a plurality of virtual computers to operate executes the following process. In other words, an instruction to arrange a program on a region of a virtual memory that is a virtualized memory of the virtual computer is given. Then, when the instruction to arrange the program on the region of the virtual memory is received, it is determined whether or not a program of an arrangement target remains arranged on the main memory. When it is determined that the program of the arrangement target remains arranged on the main memory, a region of the main memory on which the program of the arrangement target is arranged is associated with the region of the virtual memory. However, when it is determined that the program of the arrangement target does not remain arranged on the main memory, the program of the arrangement target is arranged on the region of the virtual memory.

## Description

### FIELD

The embodiments discussed herein are related to a memory management program, a memory management method, an information processing device, and a computer-readable recording medium having stored therein memory management program.

### BACKGROUND

In recent years, virtual systems in which virtual computers serving as a plurality of virtual machines are constructed on a single physical computer by a control program controlling a virtual machine called a hypervisor, and an arbitrary operating system (OS) or application program is operated for each virtual computer have been put into practical use. In the virtual system, in order to improve communication efficiency between virtual computers or the like, a technique in which a part of a memory space is shared by virtual computers has been proposed.

### CITATION LIST

### PATENT LITERATURE

[Patent Literature 1] Japanese Laid-open Patent Publication No. 11-249916

### SUMMARY OF THE INVENTION

### PROBLEMS TO BE SOLVED BY THE INVENTION

Meanwhile, a physical computer includes a high-speed cache memory of a small capacity in addition to a low-speed main memory of a large capacity in order to improve the speed for accessing a memory. In a virtual system, a program part such as an OS or an application is frequently shared by virtual computers. However, each virtual computer stores a program part in a memory space dedicated for each virtual computer from a point of view of security or the like. In this case, when the same program part is stored in a cache memory, a probability that another program part or the like will be cashed out (expelled) from the cache memory to the main memory increases, and an improvement in performance of the virtual system is likely to be prevented by access to a low-speed main memory that stores the cashed-out program part.

In this regard, the present invention has been made in light of the problems of the related art, and an object of the present invention is to provide a technique of efficiently using a cache memory and thus improving performance of a virtual system.

### MEANS TO SOLVE THE PROBLEMS

According to an embodiment of the present technology, a computer in which a plurality of virtual computers are operatable includes a plurality of arithmetic processing units, a main memory that stores data, and a cache memory that is shared from the plurality of arithmetic processing units and holds a part of the data stored in the main memory. The computer gives an instruction to arrange a program on a region of a virtualized virtual memory of the virtual computer. When the instruction to arrange the program on the region of the virtual memory is received, the computer determines whether or not a program of an arrangement target remains arranged on the main memory. When it is determined that the program of the arrangement target remains arranged on the main memory, the computer associates a region of the main memory on which the program of the arrangement target is arranged with the region of the virtual memory. However, when it is determined that the program of the arrangement target does not remain arranged on the main memory, the computer arranges the program of the arrangement target on the region of the virtual memory.

### EFFECT OF THE INVENTION

According to the present technology, a cache memory is effectively used, and thus performance of a virtual system is improved.

### BRIEF DESCRIPTION OF DRAWINGS

FIG. 1 is an overall configuration diagram of an example of a server according to an embodiment.
FIG. 2 is a functional configuration diagram of an example of a server according to an embodiment.
FIG. 3 is a diagram for describing an ID table.
FIG. 4 is a diagram for describing a management table.
FIG. 5 is a hardware configuration diagram illustrating a server.
FIG. 6 is a flowchart illustrating a virtual address notifying process.
FIG. 7 is a flowchart illustrating a physical address arrangement process.
FIG. 8 is a flowchart illustrating a management table update process.
FIG. 9 is a flowchart illustrating a management table update process.
FIG. 10 is a flowchart illustrating a use frequency update process.
FIG. 11 is a flowchart illustrating a cache memory switching process.
FIG. 12 is a flowchart illustrating a cache memory switching process.
FIG. 13 is an overall configuration diagram of a server according to a concrete embodiment.
FIG. 14 is a diagram for describing a management table according to a concrete embodiment.
FIG. 15 is a diagram for describing a management table according to a concrete embodiment.
FIG. 16 is a diagram for describing a management table according to a concrete embodiment.
FIG. 17 is a diagram for describing a management table according to a concrete embodiment.

### DESCRIPTION OF EMBODIMENT(S)

Hereinafter, a technology of an embodiment for carrying out the present invention will be described in detail with reference to the accompanying drawings.

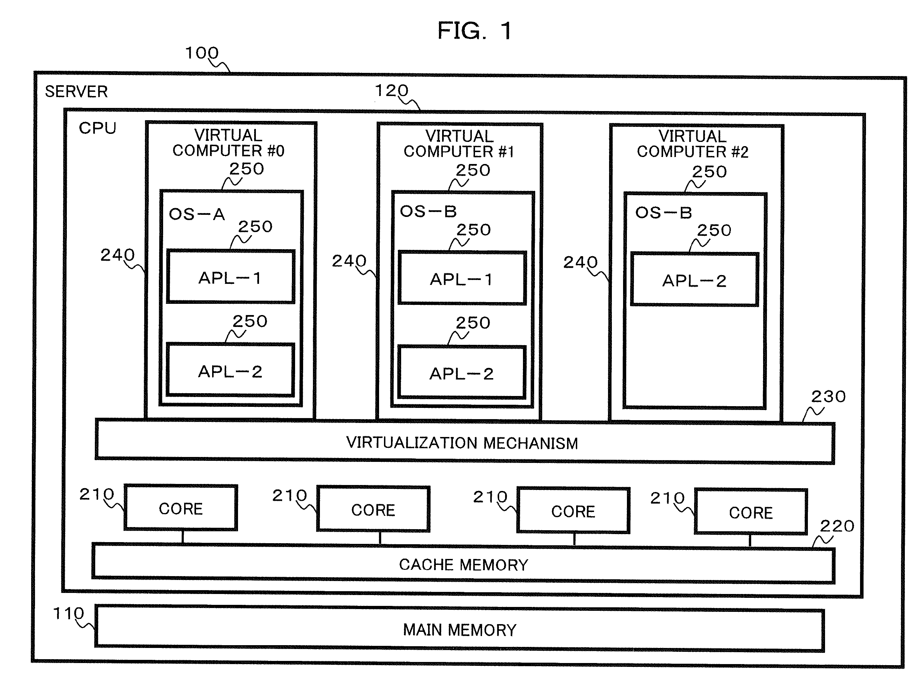

FIG. 1 illustrates an example of a server 100 according to the present embodiment.

A main memory 110 is a main memory accessed by a central processing unit (CPU) 120, and a concrete example thereof includes a random access memory (RAM). A main memory control mechanism controlling the main memory 110 includes a status notifying function capable of notifying a use status such as least recently used (LRU) information representing when a specific region in the main memory 110 had been lastly used in a certain period of time according to a request from software.

The CPU 120 includes a plurality of cores 210 and a cache memory 220 shared by the cores 210.

The cache memory 220 is controlled by a cache memory control mechanism. The cache memory control mechanism includes a status notifying function capable of notifying a use status such as LRU information representing when a specific region in the cache memory 220 had been lastly used in a certain period of time according to a request from software. Further, a software control region capable of controlling, from software, a cache-in operation of registering data from the main memory 110 to the cache memory 220 through the cache memory control mechanism and a cache-out operation of expelling (discharging) data registered to the cache memory 220 to the main memory 110 is set to a region in the cache memory 220. In other words, the server 100 includes a mechanism of arbitrarily caching a part of data stored in the main memory 110 in or out from the cache memory 220.

On the CPU 120, a plurality of virtual computers (virtual machines) 240 operate by a virtualization mechanism 230 using a hypervisor serving as a virtual machine control unit. A program part 250 operates on each of the virtual computers 240. The program part 250 is stored in a storage such as a hard disk disposed in the server 100 in advance, for example, as an execution file.

Each virtual computer 240 includes a virtualized memory (hereinafter, referred to as a "virtual memory"). Each virtual computer 240 deals each virtual memory as a physical main memory dedicated for each virtual computer 240. The virtualization mechanism 230 implements a virtual memory on each virtual computer 240 by appropriately associating a part of the main memory 110 with each virtual memory.

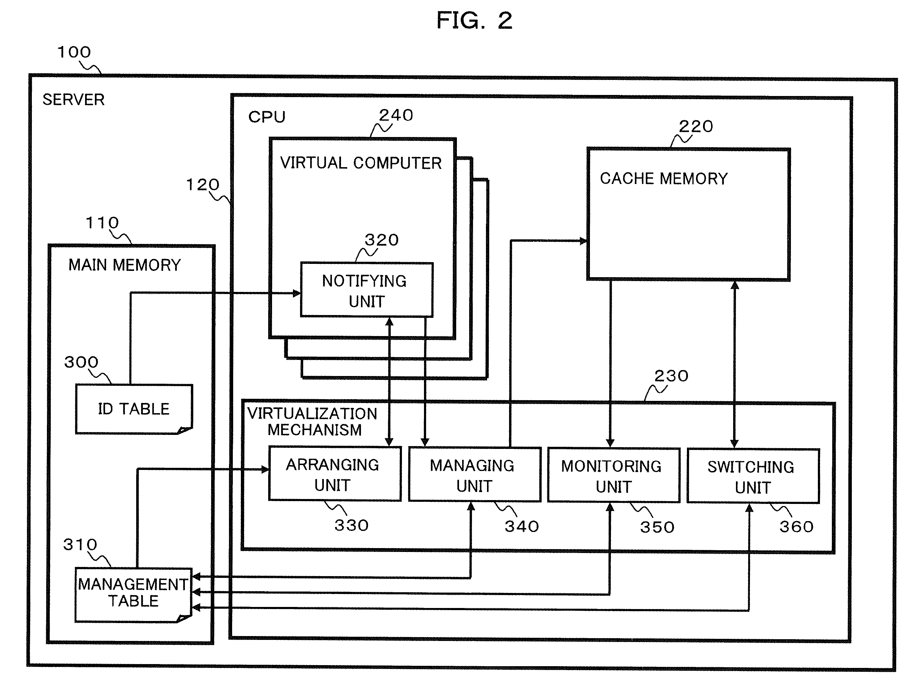

The main memory 110 of the server 100 includes an ID table 300 and a management table 310 as illustrated in FIG. 2.

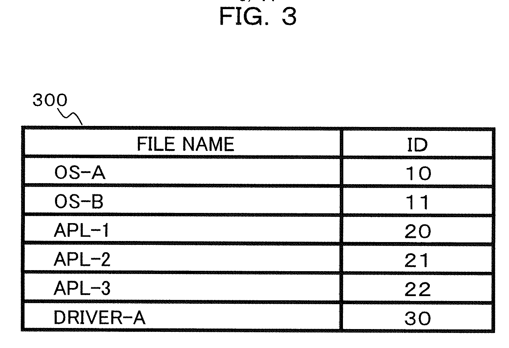

A record in which a file name of an execution file of the program part 250 and an ID specifying the program part 250 are associated with each other is stored in the ID table 300 as illustrated in FIG. 3. For example, an ID of each program part 250 is defined by an administrator of the server 100. Further, the ID table 300 is defined, for example, by an administrator of the server 100 and stored in a storage such as a hard disk disposed in the server 100 in advance.

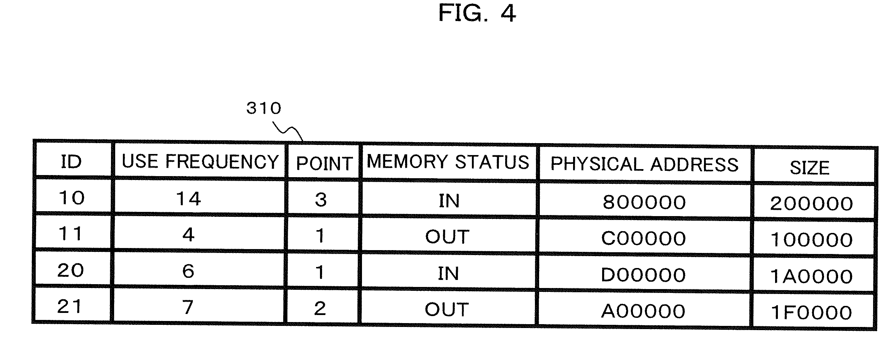

A record in which an ID of the program part 250, a use frequency, a point, a memory status, a physical address, and a size are associated with one another is stored in the management table 310 as illustrated in FIG. 4. The use frequency represents the number of times that a program such as an OS or an application uses the program part 250 during a predetermined period of time. The point is a value calculated based on the use frequency. The point is used to determine whether a main memory region that is a region of the main memory 110 in which the program part 250 is developed (arranged) is to be cached in or out from the software control region. The memory status represents whether or not the main memory region in which the program part 250 is developed has been cached in from the software control region. When the main memory region in which the program part 250 is developed is cached in, the memory status becomes "IN." However, when the main memory region in which the program part 250 is developed is not cached in, the memory status becomes "OUT." A head address of the main memory region in which the program part 250 is developed is stored at a physical address in hexadecimal. A size of a byte unit of the main memory region in which the program part 250 is developed is stored in hexadecimal. Hereinafter, a main memory region specified by a physical address and a size is referred to as a "data memory region."

The physical address and the size are as an example of location information of the program part 250. Further, the management table 310 is an example of a table.

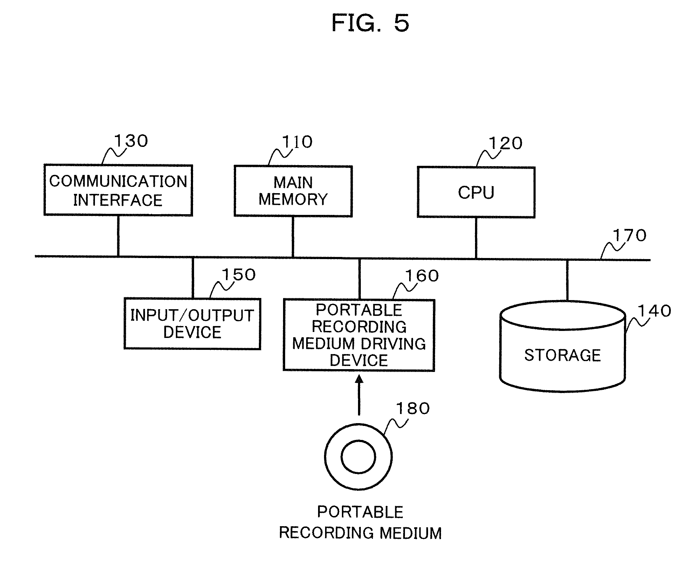

The server 100 includes hardware such as a communication interface 130, a storage 140, an input/output (I/O) device 150, and a portable recording medium driving device 160 in addition to the CPU 120 and the main memory 110 as illustrated in FIG. 5. The hardware is connected with one another via a bus 170. The communication interface 130 is a device that transmits and receives data via a network, and a concrete example thereof includes a network card. The I/O device 150 is a device that inputs data to the server 100 or outputs data from the server 100, and concrete examples thereof include a keyboard, a mouse, and a display. The portable recording medium driving device 160 is a device that reads data from a portable recording medium 180 recording computer readable data such as a CD-ROM or a DVD-ROM, and concrete examples thereof include a CD-ROM drive and a DVD-ROM drive.

A memory management program for implementing the present embodiment is recorded on the portable recording medium 180. The memory management program recorded on the portable recording medium 180 is installed in the storage 140 from the portable recording medium driving device 160. The CPU 120 develops the installed memory management program in the main memory 110, and executes the memory management program to implement a notifying unit 320, an arranging unit 330, a managing unit 340, a monitoring unit 350, and a switching unit 360 as illustrated in FIG. 2. The notifying unit 320 is implemented on each virtual computer 240. The arranging unit 330, the managing unit 340, the monitoring unit 350, and the switching unit 360 are implemented on the virtualization mechanism 230. The memory management program may be installed in the storage 140 from a network through the communication interface 130.

when a developing instruction of the program part 250 is received, the virtual computer 240 transmits, for example, a file name of an execution file of the program part 250 of a developing target to the notifying unit 320 disposed therein. Further, when the developing instruction of the program part 250 is received, an OS on the virtual computer 240 transmits, for example, a file name of an execution file of the program part 250 of the developing target to the notifying unit 320 on the virtual computer 240 disposed therein.

The notifying unit 320 transmits an ID of the program part 250 of the developing target to the arranging unit 330. When a head address (hereinafter, referred to as a "virtual address") and the size of the region of the virtual memory in which the program part 250 of the developing target is developed are transmitted from the arranging unit 330, the notifying unit 320 notifies the virtual computer or the OS of the transmitted virtual address and size. Meanwhile, when a virtual address of NULL (a state in which a value is not set) and a size of NULL are transmitted, the notifying unit 320 develops the program part 250 of the developing target in the virtual memory, and transmits a virtual address, a size, and an ID of a developed portion to the managing unit 340. The notifying unit 320 notifies the virtual computer or the OS of the virtual address and the size of the developed portion.

The virtual computer 240 or the OS that is notified of the virtual address and the size activates the developed program part 250 based on the notified virtual address and size.

The arranging unit 330 determines whether or not the program part 250 including the received ID has been already developed in the main memory region. When it is determined that the program part 250 has been developed in the main memory region, the arranging unit 330 associates the main memory region in which the program part 250 is developed with the region of the virtual memory. The arranging unit 330 transmits the virtual address and the size of the region of the virtual memory associated with the main memory region to the notifying unit 320. However, when it is determined that the program part 250 has not been developed, the arranging unit 330 transmits a virtual address of a NULL value and a size of a NULL value to the notifying unit 320. The arranging unit 330 is an example of a determining unit.

The managing unit 340 generates a record of the management table 310, caches in the main memory region of each portion in which each program part 250 is developed from the main memory 110 to the cache memory 220, and caches outs the main memory region from the cache memory 220 to the main memory 110.

The monitoring unit 350 determines whether or not each program part 250 developed in the main memory 110 has been used at intervals of a predetermined period of time, for example, at intervals of 10 ms, and updates a use frequency of each record of the management table 310.

The switching unit 360 calculates a point of each record of the management table 310 at certain period of time intervals, for example, at intervals of 200 ms, and caches in and out each main memory region in which each program part 250 is developed.

The intervals of the predetermined period of time and the certain period of time are adjusted, for example, by an administrator of a hypervisor or the server 100 so that performance of a virtual system is improved by executing a cache-in and cache-out process according to a point at appropriate intervals.

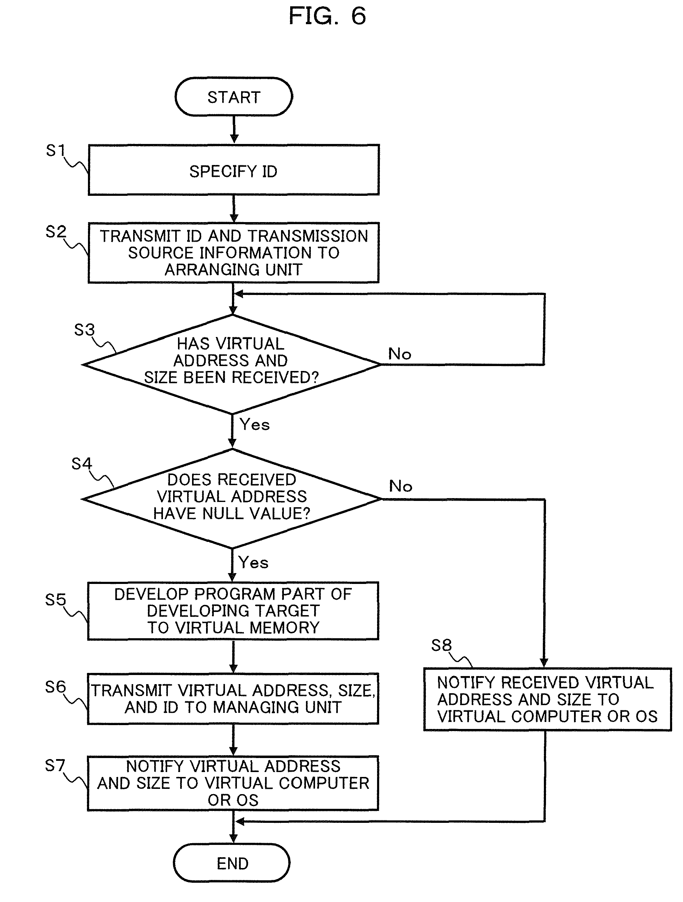

FIG. 6 is a flowchart illustrating a virtual address notifying process executed when the notifying unit 320 receives the developing instruction of the program part 250 from the arranging unit 330, for example, when the notifying unit 320 receives a file name of an execution file of the program part 250 of the developing target from the arranging unit 330.

In step 1 (in the drawings, hereinafter referred to as "S1"), the notifying unit 320 specifies an ID of the program part 250 based on the received file name with reference to the ID table 300.

In step 2, the notifying unit 320 transmits the specified ID and transmission source information specifying the notifying unit 320 that is a transmission source to the arranging unit 330.

In step 3, it is determined whether or not the notifying unit 320 has received the virtual address and the size from the arranging unit 330. When the virtual address and the size have been received, the notifying unit 320 causes the process to proceed to step 4 (Yes), but when the virtual address and the size have not been received, the process returns to step 3 (No). In other words, the notifying unit 320 does not cause the process to proceed to step 4 until the virtual address and the size are received.

In step 4, the notifying unit 320 determines whether or not the received virtual address is the NULL value. When it is determined that the virtual address is the NULL value, the notifying unit 320 causes the process to proceed to step 5 (Yes), but when the virtual address is not the NULL value, the process proceeds to step 8 (No).

In step 5, the notifying unit 320 develops the program part 250 of the developing target in the virtual memory.

In step 6, the notifying unit 320 transmits the virtual address and the size of the program part 250 developed in the virtual memory and the ID of the developed program part 250 to the managing unit 340.

In step 7, the notifying unit 320 notifies the virtual computer 240 or the OS on the virtual computer 240 disposed therein of the virtual address and the size of the program part 250 developed in the virtual memory. In other words, when the developed program part 250 is the OS, the notifying unit 320 notifies the virtual computer 240 of the virtual address and the size of the developed portion, and when the developed program part 250 is an application or a driver, the notifying unit 320 notifies the OS of the virtual address and the size of the developed portion.

In step 8, the notifying unit 320 notifies the virtual computer 240 or the OS on the virtual computer 240 disposed therein of the received virtual address and size. In other words, when the program part 250 developed in the virtual memory region specified by the received virtual address and size is the OS, the notifying unit 320 transmits the received virtual address and size to the virtual computer 240 disposed therein. Further, when the program part 250 developed in the virtual memory region specified by the received virtual address and size is an application or a driver, the notifying unit 320 notifies the OS on the virtual computer 240 disposed therein of the received virtual address and size.

Through the virtual address notifying process, the notifying unit 320 transmits the ID of the program part 250 of the developing target to the arranging unit 330. When the virtual address transmitted from the arranging unit 330 is not the NULL value, the notifying unit 320 notifies the virtual computer 240 or the OS on the virtual computer 240 of the transmitted virtual address and the size. Meanwhile, when the transmitted virtual address is the NULL value, the notifying unit 320 develops the program part 250 of the developing target in the virtual memory. Further, the notifying unit 320 transmits the virtual address and the size of the region of the virtual memory of the developed portion of the developed program part 250 and the ID of the developed program part 250 to the managing unit 340. Then, the notifying unit 320 notifies the virtual computer 240 or the OS on the virtual computer 240 of the virtual address and the size of the region of the virtual memory of the developed portion of the developed program part 250.

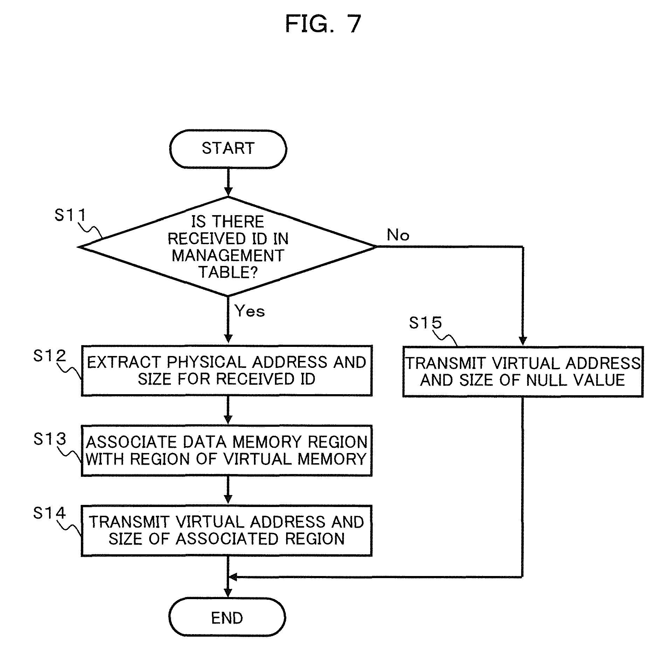

FIG. 7 is a flowchart illustrating a physical address arrangement process executed when the arranging unit 330 receives the ID and the transmission source information.

In step 11, the arranging unit 330 determines whether or not an ID received from the notifying unit 320 of the virtual computer 240 is present in the management table 310. When it is determined that the received ID is present, the arranging unit 330 causes the process to proceed to step 12 (Yes), but when the received ID is not present, the process proceeds to step 15 (No).

In step 12, the arranging unit 330 specifies a record based on the received ID with reference to the management table 310. The arranging unit 330 extracts a physical address and a size from the specified record.

In step 13, the arranging unit 330 associates a data memory region on a physical memory (the main memory 110) specified by the extracted physical address and size with the region of the virtual memory of the virtual computer 240 of the notifying unit 320 specified by the transmission source information by a system call or the like.

In step 14, the arranging unit 330 transmits the virtual address and the size of the region of the virtual memory of the portion associated with the data memory region on the physical memory to the notifying unit 320 specified by the transmission source information.

In step 15, the arranging unit 330 transmits the virtual address of the NULL value and the size of the NULL value to the notifying unit 320 specified by the transmission source information.

Through the physical address arrangement process, when a received ID is present in the management table 310, the arranging unit 330 specifies a record based on the received ID. Further, the arranging unit 330 associates the data memory region on the physical memory (the main memory 110) of the specified record with the region of the virtual memory of the virtual computer 240 in which the notifying unit 320 specified by the transmission source information is disposed. Then, the arranging unit 330 transmits the virtual address and the size of the region of the virtual memory of the associated portion to the notifying unit 320. When the received ID is not present in the management table 310, the arranging unit 330 transmits the virtual address of the NULL value and the size of the NULL value to the notifying unit 320.

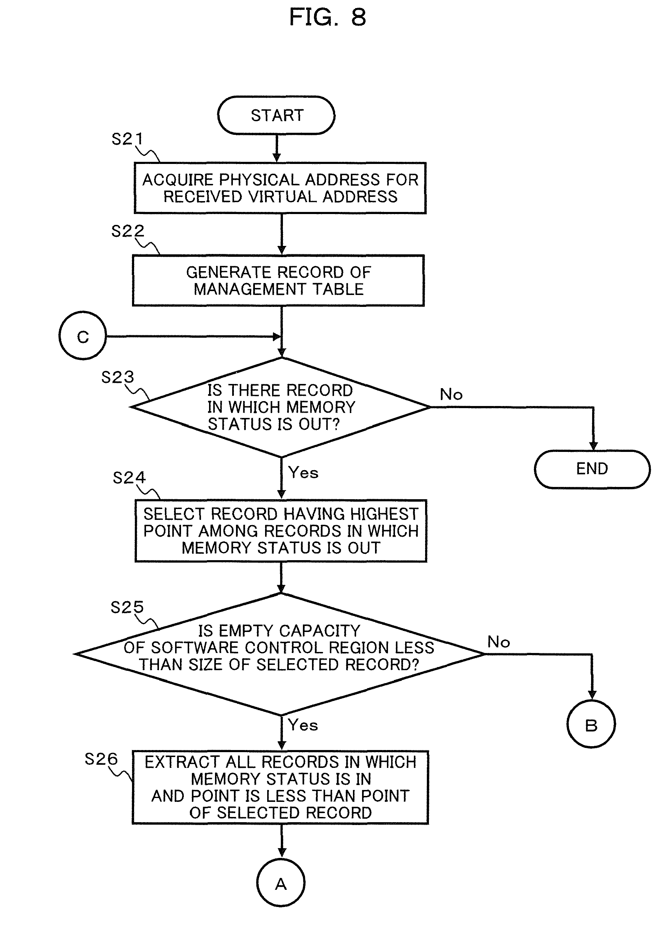

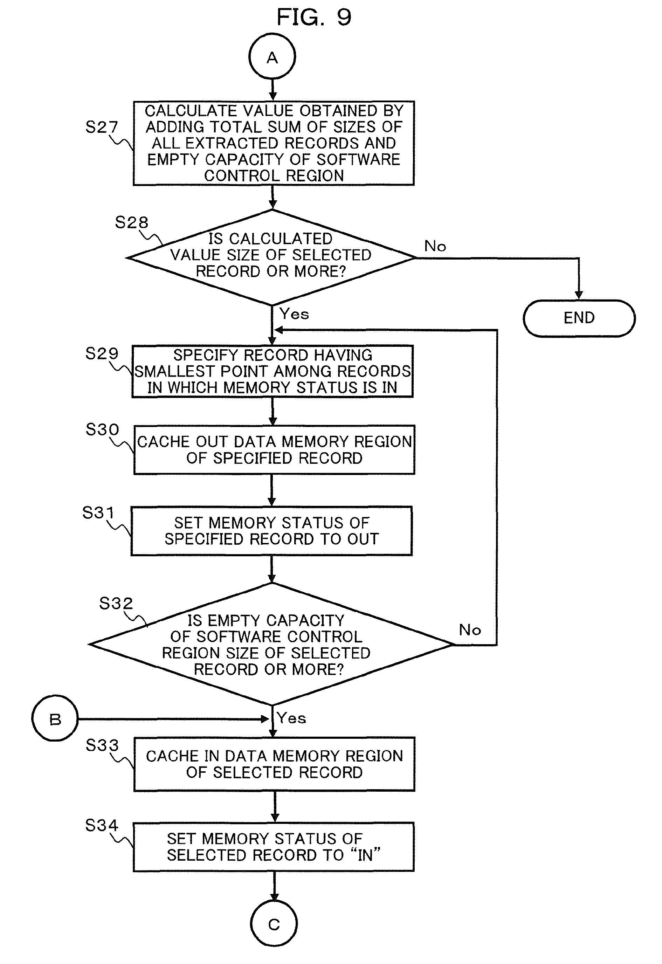

FIGS. 8 and 9 are flowcharts illustrating a management table update process executed when the managing unit 340 receives the ID, the virtual address, and the size from the notifying unit 320.

In step 21, the managing unit 340 acquires the physical address associated with the received virtual address, for example, by a system call executed by the OS.

In step 22, the managing unit 340 generates a record of the management table 310 based on the physical address, the received ID, and the size. The managing unit 340 sets zero (0) to the use frequency and the point of the generated record and initializes the use frequency and the point.
Further, the managing unit 340 sets "OUT" representing that the data memory region specified by the generated record is cashed out from the cache memory 220 to the main memory 110 to the memory status of the record. Then, the managing unit 340 stores the generated record in the management table 310 to update the management table 310.

In step 23, the managing unit 340 determines whether or not there is a record in which the memory status is "OUT" with reference to the management table 310. When it is determined that there is a record in which the memory status is "OUT", the managing unit 340 causes the process to proceed to step 24 (Yes), but when it is determined that there is no record in which the memory status is "OUT", the process ends (No).

In step 24, the managing unit 340 selects a record including the highest point among the records in which the memory status is "OUT" with reference to the management table 310. When there are a plurality of corresponding records, the managing unit 340 refers to the use status of the LRU information and the like of the data memory region of each corresponding record using the status notifying function of the main memory control mechanism. The managing unit 340 specifies the data memory region that has been used the most recently from the present time based on the use status of the LRU information and the like of the data memory region of each referred record, and selects a record on the specified data memory region.

In step 25, the managing unit 340 determines whether or not a free space of the software control region is less than the size of the selected record using the status notifying function of the cache memory control mechanism. When it is determined that the free space of the software control region is less than the size of the selected record, the managing unit 340 causes the process to proceed to step 26 (Yes), but when it is determined that the free space of the software control region is the size of the selected record or more, the process proceeds to step 33 (No).

In step 26, the managing unit 340 extracts all records in which the memory status is "IN" representing that the data memory region specified by the record is cached in from the main memory 110 to the cache memory 220, and a point is less than a point of the selected record with reference to the management table 310.

In step 27, the managing unit 340 calculates a value obtained by adding a total sum (0 when there is no record extracted in step 26) of the sizes of all extracted records and the free space of the software control region.

In step 28, the managing unit 340 determines whether or not the value calculated in step 27 is the size of the selected record or more. When it is determined that the value calculated in step 27 is the size of the selected record or more, the managing unit 340 causes the process to proceed to step 29 (Yes), but when it is determined that the calculated value is less than the size of the selected record, the process ends (No).

In step 29, the managing unit 340 specifies a record including the smallest point among records in which the memory status is "IN" with reference to the management table 310. When there are a plurality of corresponding records, the managing unit 340 refers to the use status of the LRU information and the like of the software control region (hereinafter, referred to as a "data cache region") of the portion in which the data memory region of each corresponding record is cached using the status notifying function of the cache memory control mechanism. The managing unit 340 specifies the data cache region that has been used the least recently from the present time based on the use status of the LRU information and the like of the data cache region of each corresponding record, and specifies a record corresponding to the specified data cache region.

In step 30, the managing unit 340 caches out the data memory region of the specified record from the software control region on the cache memory 220 to the main memory 110.

In step 31, the managing unit 340 sets the memory status of the specified record to "OUT."

In step 32, the managing unit 340 determines whether or not the free space of the software control region is the size of the selected record or more using the status notifying function of the cache memory control mechanism. When it is determined that the free space is the size of the selected record or more, the managing unit 340 causes the process to proceed to step 33 (Yes), but when it is determined that the free space is less than the size of the selected record, the process proceeds to step 29 (No).

In step 33, the managing unit 340 caches in the data memory region of the selected record from the main memory 110 to the software control region on the cache memory 220.

In step 34, the managing unit 340 sets the memory status of the selected record to "IN."

Through the management table update process, the managing unit 340 generates the record of management table 310 based on the ID, the virtual address, and the size received from the notifying unit 320 of the virtual computer 240. Further, the managing unit 340 more preferentially caches in a data memory region of a record including a higher point with reference to the points of the records of the management table 310. Further, when the software control region does not include a free space enough to cache in a data memory region of a record including a higher point, the managing unit 340 caches out a data memory region of a record including a lower point. Then, the managing unit 340 more preferentially caches in the data memory region of the record including the higher point.

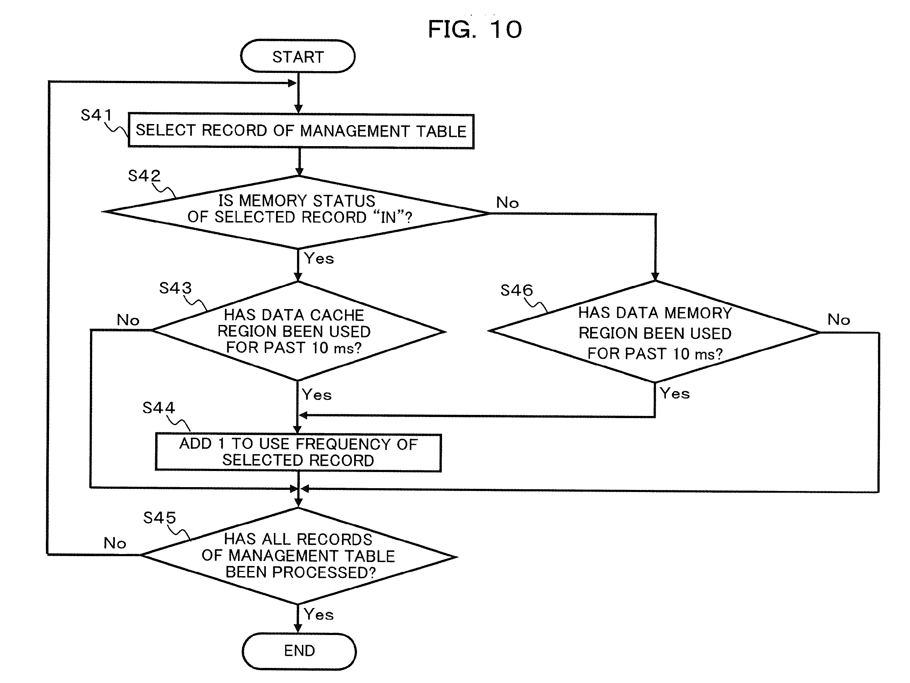

FIG. 10 is a flowchart illustrating a use frequency update process executed by the monitoring unit 350 at intervals of a predetermined period of time, for example, at intervals of 10 ms.

In step 41, the monitoring unit 350 sequentially selects records with reference to the management table 310.

In step 42, the monitoring unit 350 determines whether or not the memory status of the selected record is "IN." When it is determined that the memory status is "IN", the monitoring unit 350 causes the process to proceed to step 43 (Yes), but when it is determined that the memory status is not "IN", the process proceeds to step 46 (No).

In step 43, the monitoring unit 350 determines whether or not the data cache region has been used, for example, for past 10 ms from the present time with reference to the use status of the LRU information and the like of the data cache region of the selected record through the status notifying function of the cache memory control mechanism. When it is determined that the data cache region has been used for past 10 ms, the monitoring unit 350 causes the process to proceed to step 44 (Yes), but when it is determined that the data cache region has not been used for past 10 ms, the process proceeds to step 45 (No).

In step 44, the monitoring unit 350 adds "1" to the use frequency of the selected record.

In step 45, the monitoring unit 350 determines whether or not all the records of the management table 310 have been processed. When it is determined that all the records of the management table 310 have been processed, the monitoring unit 350 ends the process (Yes), but when it is determined that at least any one of the records of the management table 310 has not been processed, the process proceeds to step 41 (No).

In step 46, the monitoring unit 350 determines whether or not the data memory region has been used, for example, for past 10 ms from the present time with reference to the use status of the LRU information and the like of the data memory region of the selected record through the status notifying function of the main memory control mechanism. When it is determined that the data memory region has been used for past 10 ms, the monitoring unit 350 causes the process to proceed to step 44 (Yes), but when it is determined that the data memory region has not been used for past 10 ms, the process proceeds to step 45 (No).

Through the use frequency update process, the monitoring unit 350 determines whether or not the data cache region or the data memory region of each record of the management table 310 has been used, for example, for past 10 ms from the present time. When it is determined that the data cache region or the data memory region has been used, for example, for past 10 ms from the present time, the monitoring unit 350 adds "1" to the use frequency of the corresponding record.

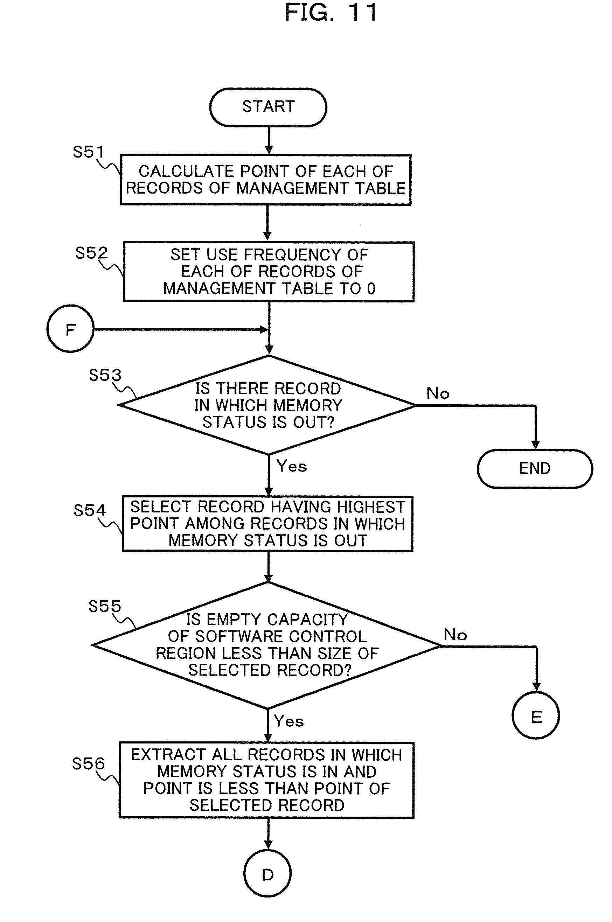

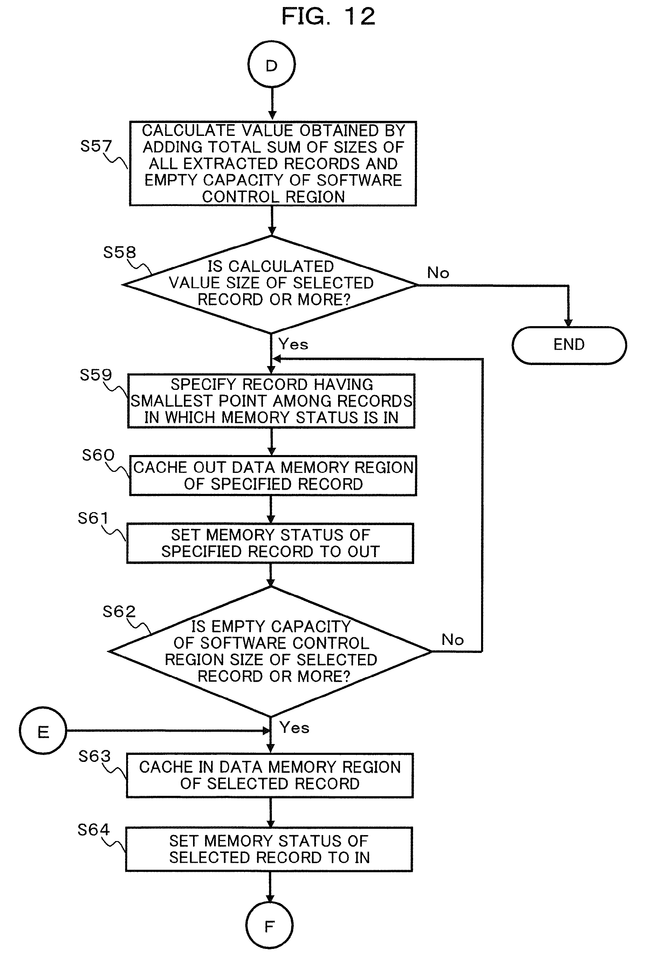

FIGS. 11 and 12 are flowcharts illustrating a cache memory switching process executed by the switching unit 360 at intervals of a predetermined period of time, for example, at intervals of 200 ms.

In step 51, the switching unit 360 calculates a value obtained by dividing the use frequency, for example, by 5 and rounding out anything below the decimal point on each record with reference to the management table 310. Then, the switching unit 360 sets the value set on each record to the point of each record.

In step 52, the switching unit 360 initializes the use frequency of each record of the management table 310 to 0.

In step 53, the switching unit 360 determines whether or not there is a record in which the memory status is "OUT" with reference to the management table 310. When it is determined that the memory status is "OUT", the switching unit 360 causes the process to proceed to step 54 (Yes), but when it is determined that the memory status is not "OUT", the process ends (No).

In step 54, the switching unit 360 selects a record including the highest point among the records in which the memory status is "OUT" with reference to the management table 310. When there are a plurality of corresponding records, the switching unit 360 refers to the use status of data memory region of each corresponding record using the status notifying function of the main memory control mechanism. The switching unit 360 specifies the data memory region that has been used the most recently from the present time based on the use status of the data memory region of each corresponding record, and selects a record on the specified data memory region.

In step 55, the switching unit 360 determines whether or not a free space of the software control region is less than the size of the selected record using the status notifying function of the cache memory control mechanism. When it is determined that the free space of the software control region is less than the size of the selected record, the switching unit 360 causes the process to proceed to step 56 (Yes), but when it is determined that the free space of the software control region is the size of the selected record or more, the process proceeds to step 63 (No).

In step 56, the switching unit 360 extracts all records in which the memory status is "IN" and a point is less than a point of the selected record with reference to the management table 310.

In step 57, the switching unit 360 calculates a value obtained by adding a total sum (0 when there is no record extracted in step 56) of the sizes of all extracted records and the free space of the software control region.

In step 58, the switching unit 360 determines whether or not the calculated value is the size of the selected record or more. When it is determined that the calculated value is the size of the selected record or more, the switching unit 360 causes the process to proceed to step 59 (Yes), but when it is determined that the calculated value is less than the size of the selected record, the process ends (No).

In step 59, the switching unit 360 specifies a record including the smallest point among records in which the memory status is "IN" with reference to the management table 310. When there are a plurality of corresponding records, the switching unit 360 refers to the use status of the data cache region of each corresponding record using the status notifying function of the cache memory control mechanism. The switching unit 360 specifies the data cache region that has been used the least recently from the present time based on the use status of the LRU information of the data cache region of each corresponding record, and specifies a record on the specified data cache region.

In step 60, the switching unit 360 caches out the data memory region of the specified record from the software control region.

In step 61, the switching unit 360 sets the memory status of the specified record to "OUT."

In step 62, the switching unit 360 determines whether or not the free space of the software control region is the size of the selected record or more using the status notifying function of the cache memory control mechanism. When it is determined that the free space is the size of the selected record or more, the switching unit 360 causes the process to proceed to step 63 (Yes), but when it is determined that the free space is less than the size of the selected record, the process proceeds to step 59 (No).

In step 63, the switching unit 360 caches in the data memory region of the selected record to the software control region.

In step 64, the switching unit 360 sets the memory status of the selected record to "IN."

Through the cache memory switching process, the switching unit 360 calculates the point based on the use frequency on each of the records of the management table 310. Further, the switching unit 360 more preferentially caches in a data memory region of a record including a higher point with reference to the points of the records of the management table 310. Further, when the software control region does not include a free space enough to cache in a data memory region of a record including a higher point, the switching unit 360 caches out a data memory region of a record including a lower point. Then, the switching unit 360 more preferentially caches in the data memory region of the record including the higher point.

Thus, in the virtual computer 240, when the arranging unit 330 of the virtualization mechanism 230 gives the developing instruction of the program part 250 and the program part 250 of the developing target is already present in the main memory region, the data memory region in which the program part 250 of the developing target is developed is associated with the region of the virtual memory of the virtual computer 240. Therefore, separately from the existing data memory region, the main memory region in which the program part 250 of the developing target is to be developed is not allocated, and thus the main memory region can be saved since an allocation is not made as much. Thus, it is possible to effectively use the main memory 110. Further, the main memory region that needs not be allocated is not cached in the region of the cache memory 220, and thus the region of the cache memory 220 can be saved by a degree corresponding to the main memory region that needs not be allocated. Thus, it is possible to effectively use the cache memory 220, and the performance of the virtual system is improved.

Further, the points of the records of the management table 310 are updated at intervals of a predetermined period of time, and the data memory region of the record of the management table 310 is cached in or out based on the points. As a result, since the cached-in data memory region is reviewed and switched at appropriate intervals, it is possible to effectively use the cache memory 220, and the performance of the virtual system is improved.

Further, the server 100 in which the memory management program operates may be implemented as in the following embodiment in addition to the above embodiment.

The CPU 120 of the server 100 may include only one core.

The server 100 may include a plurality of CPU 120s. In this case, each of the CPUs includes the management table 310.

The server 100 may be configured such that a plurality of CPUs 120 each of which includes a single core, and a single cache memory 220 is shared by the CPUs 120 including the single core.

A concrete example of the above-described embodiment will be described below.

As the premise of the embodiment, the ID table 300 has the structure illustrated in FIG. 3. The management table 310 has the structure illustrated in FIG. 4. Further, virtual computers #0 to #2 are present on the virtualization mechanism 230 of the server as illustrated in FIG. 1.

An OS-A operates on the virtual computer #0 as the OS. APL-1 and APL-2 operate on the OS-A of the virtual computer #0 as applications. An OS-B operates on the virtual computer #1 as the OS. APL-1 and APL-2 operate on the OS-B of the virtual computer #1 as applications. An OS-B operates on the virtual computer #2 as the OS.

The free space of the software control region is 100000 bytes in hexadecimal.

A data cache region of a record including an ID "10" in the management table 310 has been used for past 10 ms from the present time. Further, a data memory region of a record including an ID other than "10" in the management table 310, that is, a data cache region of a record including an ID other than "10" in the management table 310 has not been used for past 10 ms from the present time.

An instruction for generating the virtual computer #3 and operating the OS_A on the virtual computer #3 and a file name "OS-A" of the OS-A are input from the user to the virtualization mechanism 230. The virtualization mechanism 230 generates the virtual computer #3 and activates the virtual computer #3. When a developing instruction of the program part 250 specified by the file name "OS-A" on the activated virtual computer #3 is given, the file name "OS-A" is transmitted to the notifying unit 320. The notifying unit 320 that has received the file name "OS-A" specifies "10" serving as the ID of the OS-A based on the file name with reference to the ID table 300. Then, the notifying unit 320 transmits the ID "10" and the transmission source information to the arranging unit 330.

The arranging unit 330 extracts a physical address "800000" and a size "200000" from the record specified by the ID "10" with reference to the management table 310. Further, the arranging unit 330 associates a data memory region specified by the physical address "800000" and the size "200000," for example, from "A0000000" to "A01FFFFF" of the virtual memory region of the virtual computer #3. Then, the arranging unit 330 transmits the virtual address "A0000000" and the size "200000" of the associated virtual memory region to the notifying unit 320 of the virtual computer #3.

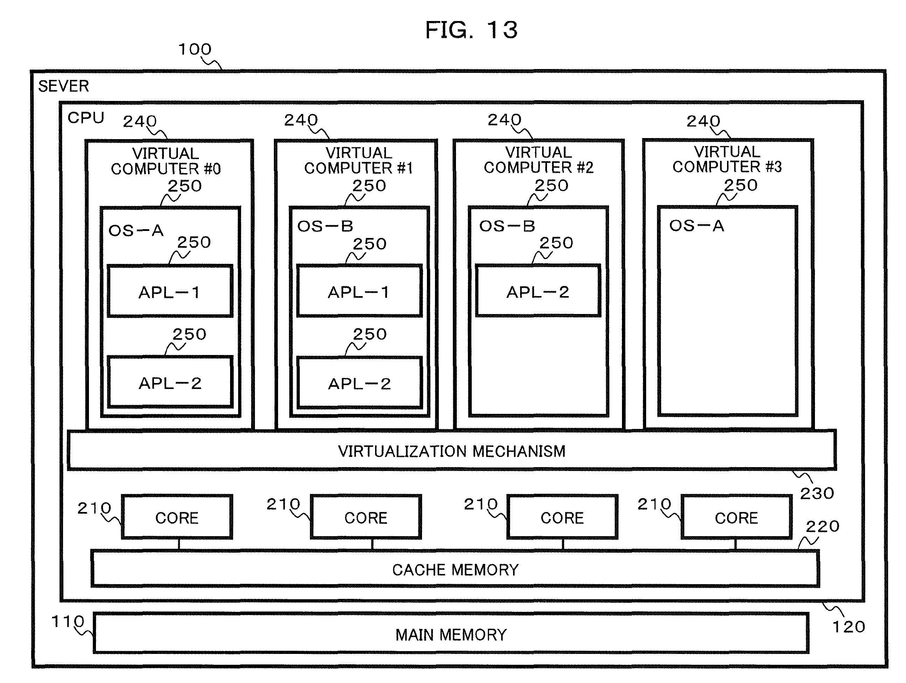

The notifying unit 320 notifies the virtual computer #3 of the received virtual address and size since the received virtual address is not the NULL value. The virtual computer #3 activates the OS-A based on the notified virtual address and size as illustrated in FIG. 13.

Further, in order to execute APL-3 that is the program part 250 on the OS-B of the virtual computer #1, the user inputs a file name "APL-3." In order to execute the APL-3, the OS-B issues an instruction to develop the APL-3 in the virtual memory of the virtual computer #1 from the file of the file name "APL-3," and transmits the file name "APL-3" to the notifying unit 320 of the virtual computer #1.

Upon receiving the file name "APL-3," the notifying unit 320 specifies an ID "22" of the APL-3 based on the received file name with reference to the ID table 300. Then, the notifying unit 320 transmits the ID "22" and the transmission source information to the arranging unit 330.

Since the record specified by the ID "22" is not present in the management table 310, the arranging unit 330 transmits the virtual address of the NULL value and the size of the NULL value to the notifying unit 320 of the virtual computer 240#1.

When the virtual address of the NULL value is transmitted, the notifying unit 320 develops the APL-3 in the region of the virtual memory of the virtual computer 240#1 with reference to the storage 140. Further, when the regions of the virtual memory in which the APL-3 range, for example, from "B0000000" to "BOOOFFFF," the notifying unit 320 transmits a virtual address "B0000000," a size "10000", and an ID "22" to the managing unit 340. Further, the notifying unit 320 notifies the OS-B of a virtual address "B0000000" and a size "10000." The OS-B activates the APL-3 based on the notified virtual address and size.

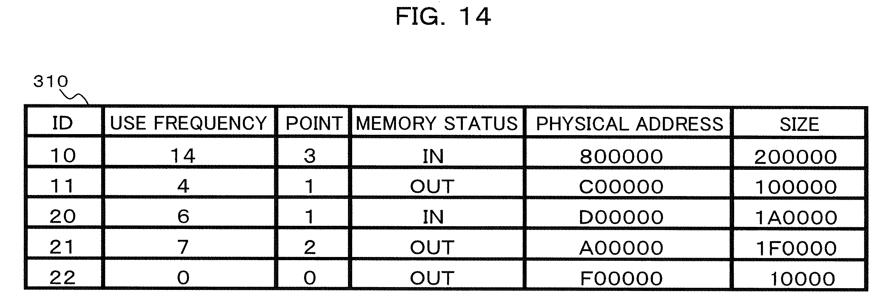

Upon receiving virtual address "B0000000" from the notifying unit 320, the managing unit 340 acquires a physical address "F00000" for the virtual address "B0000000." The managing unit 340 generates a record of the management table 310 to which the physical address "F00000", the received size "10000", the ID "22", the use frequency "0", the point "0," and the memory status "OUT" are set. The managing unit 340 stores the generated record in the management table 310 as illustrated in FIG. 14.

Further, since the record in which the memory status is "OUT" is present in the management table 310, the managing unit 340 selects a record including the highest point "2" and the ID "21" among the records in which the memory status is "OUT." Since the free space "100000" of the software control region is less than the size "1F0000" of the selected record, the managing unit 340 extracts a record including an ID "20" in which the point is less than 2 among the records in which the memory status is "IN" with reference to the management table 310.

Then, the managing unit 340 calculates a value "2A0000" obtained by adding a total sum of the sizes of the extracted records and the free space of the software control region. Since the calculated value "2A0000" is the size "1F0000" of the selected record or more, the managing unit 340 caches out the data memory region of the record including the ID "20", and sets the memory status of the record including the ID "20" to "OUT."

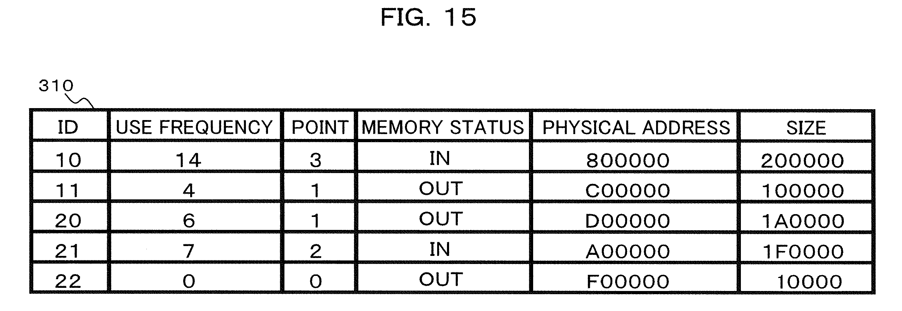

Further, since the free space of the software control region becomes "2A0000" and thus the size "1F0000" of the selected record or more, the managing unit 340 caches in the data memory region of the selected record in the software control region, and sets the memory status of the selected record to "IN." As a result of processing, the management table 310 has content illustrated in FIG. 15, and thus the managing unit 340 selects a record including an ID "11." Since the size "100000"of the selected record is larger than a value "C0000" obtained by adding a total sum "10000" of records including a point less than a point 1 of the selected record and the free space "B0000" of the software control region, the managing unit 340 ends the process.

The monitoring unit 350 selects a record "10" in the management table 310. Since the memory status of the selected record is "IN," the monitoring unit 350 determines whether or not the data cache region of the selected record has been used for past 10 ms from the present time. Since the data cache region of the selected record has been used for past 10 ms from the present time, the monitoring unit 350 adds "1" to the use frequency of the selected record.

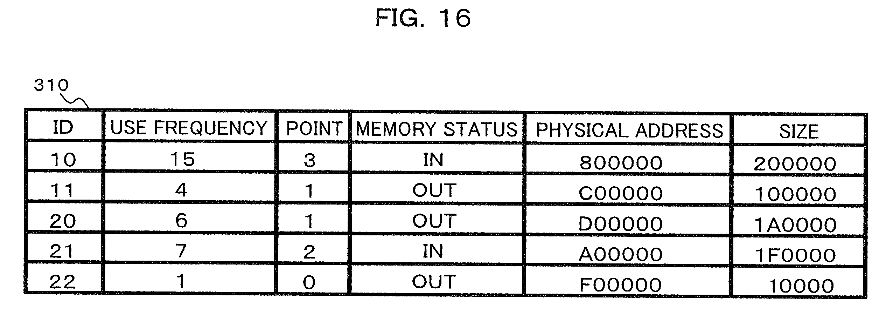

The monitoring unit 350 selects a record "11" in the management table 310. Since the memory status of the selected record is "OUT," the monitoring unit 350 determines whether or not the data memory region of the selected record has been used for past 10 ms from the present time. Since the data memory region of the selected record has not been used for past 10 ms from the present time, the monitoring unit 350 causes the process to proceed to processing a next record in the management table 310. Similarly, as a result of executing the use frequency update process on each of the records in the management table 310 through the monitoring unit 350, the records of the management table 310 include content illustrated in FIG. 16.

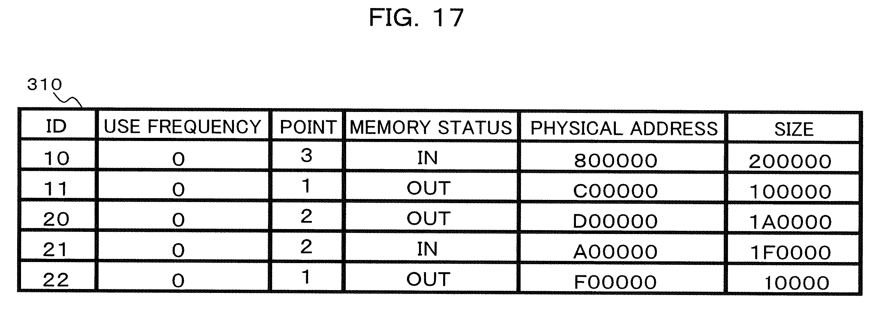

The switching unit 360 calculates the point of each of the records in the management table 310 based on the use frequency, and sets the use frequency to "0" (for example, the point of the record "22" in the management table 310 becomes 1, and the use frequency becomes 0 as illustrated in FIG. 17).

Further, since the record in which the memory status is "OUT" is present in the management table 310, the switching unit 360 selects a record of an ID "20" including the highest point "2" among records in which the memory status is "OUT." Since the free space "B0000" of the software control region is less than the size "1A0000" of the selected record, the switching unit 360 extracts a record including a point less than "2" among records in which the memory status is "IN." Since there is no corresponding record, the switching unit 360 uses the free space "B0000" of the software control region as a calculated value. Since the calculated value "B0000" is not the size "1A0000" of the selected record or more, the switching unit 360 ends the process.

### REFERENCE SIGNS LIST

- 100:: server
- 110:: main memory
- 220:: cache memory
- 240:: virtual computer
- 310:: management table
- 320:: notifying unit
- 330:: arranging unit
- 340:: managing unit
- 350:: monitoring unit
- 360:: switching unit

## Claims

1. A memory management program causing a computer, which includes a plurality of arithmetic processing units, a main memory that stores data, and a cache memory that is shared from the plurality of arithmetic processing units and holds a part of the data stored in the main memory, and allows a plurality of virtual computers to operate, to execute a process of:
giving an instruction to arrange a program on a region of a virtual memory that is a virtualized memory of the virtual computer;
when the instruction to arrange the program on the region of the virtual memory is received, determining whether or not a program of an arrangement target remains arranged on the main memory;
when it is determined that the program of the arrangement target remains arranged on the main memory, associating a region of the main memory on which the program of the arrangement target is arranged with the region of the virtual memory; and
when it is determined that the program of the arrangement target does not remain arranged on the main memory, arranging the program of the arrangement target on the region of the virtual memory.

2. The memory management program according to claim 1,
wherein the computer determines whether or not the program of the arrangement target remains arranged on the main memory with reference to a table in which a program arranged on the main memory and location information specifying a region of the main memory on which the program is arranged are held in association with each other, and
the computer updates the location information held in the table for the program of the arrangement target when it is determined that the program of the arrangement target does not remain arranged on the main memory.

3. The memory management program according to claim 2,
wherein the location information includes a head physical address of the region of the main memory on which the program is arranged and a size of the arranged program.

4. The memory management program according to claim 1,
wherein the computer includes a cache memory control unit that registers or discharges a part of the data stored in the main memory to or from the cache memory, and
the computer further executes a process of switching a program registered to the cache memory and a program not registered to the cache memory according to a use frequency of each program arranged on the main memory for the program arranged on the main memory.

5. The memory management program according to claim 4,
wherein the computer discharges a program having the smallest use frequency from the cache memory among programs registered to the cache memory for the program arranged on the main memory and registers a program having the highest use frequency to the cache memory.

6. A memory management method performed by a computer, which includes a plurality of arithmetic processing units, a main memory that stores data, and a cache memory that is shared from the plurality of arithmetic processing units and holds a part of the data stored in the main memory, and allows a plurality of virtual computers to operate, the memory management method comprising:
giving an instruction to arrange a program on a region of a virtualized virtual memory of the virtual computer;
when the instruction to arrange the program on the region of the virtual memory is received, determining whether or not a program of an arrangement target remains arranged on the main memory;
when it is determined that the program of the arrangement target remains arranged on the main memory, associating a region of the main memory on which the program of the arrangement target is arranged with the region of the virtual memory; and
when it is determined that the program of the arrangement target does not remain arranged on the main memory, arranging the program of the arrangement target on the region of the virtual memory.

7. An information processing device comprising:
a plurality of arithmetic processing units;
a main memory that is connected to the plurality of arithmetic processing units and stores data;
a cache memory that is shared from the plurality of arithmetic processing units and holds a part of the data stored in the main memory;
an arranging unit that gives an instruction to arrange a program on a region of a virtualized virtual memory of the virtual computer;
a determining unit that determines whether or not a program of an arrangement target remains arranged on the main memory when an instruction to arrange a program on the region of the virtual memory is received from the arranging unit; and
a managing unit that associates the region of the main memory on which the program of the arrangement target is arranged with the region of the virtual memory when the determining unit determines that the program of the arrangement target remains arranged on the main memory, and arranges the program of the arrangement target on the region of the virtual memory when it is determined that the program of the arrangement target does not remain arranged on the main memory.

8. A computer-readable recording medium that records a memory management program causing a computer, which includes a plurality of arithmetic processing units, a main memory that stores data, and a cache memory that is shared from the plurality of arithmetic processing units and holds a part of the data stored in the main memory, and allows a plurality of virtual computers to operate, to execute a process of:
giving an instruction to arrange a program on a region of a virtual memory that is a virtualized memory of the virtual computer;
when the instruction to arrange the program on the region of the virtual memory is received, determining whether or not a program of an arrangement target remains arranged on the main memory;
when it is determined that the program of the arrangement target remains arranged on the main memory, associating a region of the main memory on which the program of the arrangement target is arranged with the region of the virtual memory; and
when it is determined that the program of the arrangement target does not remain arranged on the main memory, arranging the program of the arrangement target on the region of the virtual memory.

9. The computer-readable recording medium that records the memory management program according to claim 8,
wherein in the memory management program,
the computer determines whether or not the program of the arrangement target remains arranged on the main memory with reference to a table in which a program arranged on the main memory and location information specifying a region of the main memory on which the program is arranged are held in association with each other, and
the computer updates the location information held in the table for the program of the arrangement target when it is determined that the program of the arrangement target does not remain arranged on the main memory.

10. The computer-readable recording medium that records the memory management program according to claim 9,
wherein in the memory management program,
the location information includes a head physical address of the region of the main memory on which the program is arranged and a size of the arranged program.

11. The computer-readable recording medium that records the memory management program according to claim 8,
wherein in the memory management program,
the computer includes a cache memory control unit that registers or discharges a part of the data stored in the main memory to or from the cache memory, and
the computer further executes a process of switching a program registered to the cache memory and a program not registered to the cache memory according to a use frequency of each program arranged on the main memory for the program arranged on the main memory.

12. The computer-readable recording medium that records the memory management program according to claim 11,
wherein the computer discharges a program having the smallest use frequency from the cache memory among programs registered to the cache memory for the program arranged on the main memory and registers a program having the highest use frequency to the cache memory.
